(19) Europäisches Patentamt
European Patent Office
Office européen des brevets

(11) Numéro de publication : **0 043 775**
**B1**

(12) **FASCICULE DE BREVET EUROPÉEN**

(45) Date de publication du fascicule du brevet :
15.05.85

(51) Int. Cl.⁴ : **G 01 N 27/22**

(21) Numéro de dépôt : **81401086.4**

(22) Date de dépôt : **07.07.81**

(54) Capteur capacitif et procédé de fabrication du capteur.

(30) Priorité : 09.07.80 FR 8015263

(43) Date de publication de la demande :
13.01.82 Bulletin 82/02

(45) Mention de la délivrance du brevet :
15.05.85 Bulletin 85/20

(84) Etats contractants désignés :
CH DE FR GB IT LI

(56) Documents cités :
FR-A- 1 264 142
FR-A- 1 480 606
FR-A- 2 356 136
GB-A- 1 570 054
US-A- 4 156 268
RADIO MENTOR ELECTRONIC, vol. 36, no. 12, décembre 1970, MUNICH (DE) "Aluminium-Oxid-Kondensator misst Feuchtigkeit", page 852

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Chambaz, Bernard**
**60, rue de la Liberté**
**F-38170 Seyssins (FR)**
Inventeur : **Delapierre, Gilles**
**216, Percevalière**
**F-38170 Seyssinet (FR)**
Inventeur : **Destannes, Louis**
**31, La Provençale - Poisat**
**F-38320 Eybens (FR)**

(74) Mandataire : **Mongrédien, André et al**
**c/o BREVATOME 25, rue de Ponthieu**
**F-75008 Paris (FR)**

EP 0 043 775 B1

## Description

La présente invention a pour objet un capteur capacitif utilisable notamment comme hygromètre ainsi qu'un procédé de fabrication de ce capteur.

Un moyen connu pour mesurer l'humidité de l'air consiste à utiliser un condensateur dont le diélectrique absorbe une quantité d'eau fonction du degré hygrométrique de l'air et à mesurer la constante diélectrique.

Pour qu'un tel dispositif fonctionne correctement, l'une au moins des électrodes du condensateur doit satisfaire aux conditions suivantes :

— être perméable à l'eau ;
— avoir une faible résistance électrique ;
— être peu sensible à la corrosion.

Dans les capteurs actuels, le compromis entre ces trois exigences est généralement obtenu par l'utilisation d'une couche très mince d'or (100 Å environ) déposée sous vide. Un capteur de ce type est décrit dans l'article paru « Radio Mentor Electronic », volume 36, n° 12, décembre 1970 sous le titre « Aluminium-Oxid-Kondensator misst Feuchtigkeit ». Ce capteur se compose d'un substrat en aluminium recouvert d'une couche d'aluminium poreuse dont les pores sont ouverts du côté opposé au substrat. Une mince couche d'or perméable à l'eau recouvre cet oxyde d'aluminium du côté où les pores sont ouverts. Lorsque cet appareil est exposé à une atmosphère humide, les molécules d'eau traversent la couche d'or et se rassemblent dans les pores. La présence d'eau dans ces derniers modifie les caractéristiques électriques du condensateur et on peut déterminer le degré hygrométrique de l'air par mesure de la résistance du condensateur.

Si les deux premières conditions sont généralement bien remplies (bonne conductibilité électrique de l'or et bonne perméabilité parce que la couche est très mince), de tels condensateurs résistent mal à la corrosion : en effet, une épaisseur de 100 Å d'or peut être assez vite détruite par des agents polluants, notamment des polluants à base de soufre ($SO_2$, $H_2SO_4$), et la durée de vie de l'appareil s'en trouve diminuée.

Un moyen habituel de résoudre ce problème consiste à protéger la couche d'or par addition de filtres, une feuille de cellophane par exemple : ceci a malheureusement pour effet d'augmenter le temps de réponse du capteur et, partant, d'en diminuer la sensibilité.

La présente invention a justement pour objet de remédier à ces inconvénients en proposant un capteur capacitif utilisable comme hygromètre qui présente à la fois un bon temps de réponse et une bonne résistance à la corrosion.

Le capteur objet de l'invention est constitué, de manière classique, par un condensateur ayant deux faces conductrices entre lesquelles se trouve une matière diélectrique dont la constante diélectrique varie en fonction de la qualité absorbée par ladite matière d'un composant de l'atmosphère dans laquelle se trouve le capteur, les races conductrices dudit condensateur étant reliées à des moyens de mesure de la constante diélectrique représentative de la quantité absorbée dudit composant. Selon l'invention, l'une des faces conductrices du condensateur ainsi que la matière diélectrique comportent de nombreuses fissures mettant la matière diélectrique directement en contact avec l'atmosphère, la continuité électrique de la face conductrice fissurée étant cependant maintenue.

Le capteur objet de l'invention peut être utilisé comme hygromètre en prenant pour matière diélectrique un matériau dont la constante diélectrique varie en fonction de la quantité de l'eau absorbée.

Grâce à la présence de ces fissures, le diélectrique est directement en contact avec l'atmosphère dont on veut mesurer le degré d'humidité et non plus séparé de celle-ci par une mince couche métallique à laquelle on ajoute éventuellement un filtre : la rapidité de l'hygromètre s'en trouve nettement améliorée.

De plus, l'électrode fissurée n'a plus besoin d'être constituée par une couche métallique très mince puisqu'elle est largement entaillée. Au contraire, elle peut être constituée par une ou plusieurs couches plus épaisses d'un ou plusieurs matériaux plus résistants (une couche de chrome par exemple), ce qui la rend pratiquement insensible à la corrosion et augmente la durée de vie de l'appareil.

On peut, par exemple, réaliser l'électrode fissurée sous la forme d'une couche d'un métal peu sensible à la corrosion comme le chrome recouverte d'une couche d'un métal noble comme l'or ou le platine. La matière diélectrique peut avantageusement être un ester de cellulose. Quant à l'autre face conductrice du condensateur, elle est généralement constituée par une couche de tantale oxydée anodiquement.

L'invention a également pour objet un procédé de fabrication d'un tel capteur.

Ce procédé, du genre de ceux dans lesquels on réalise un condensateur en disposant entre deux faces conductrices une matière diélectrique dont la constante diélectrique varie en fonction de la quantité absorbée par ladite matière d'un composant de l'atmosphère dans laquelle se trouve le capteur, se caractérise en ce qu'on forme l'une desdites faces conductrices en déposant sur ladite matière diélectrique un matériau conducteur présentant des contraintes conduisant à des fissures dans le matériau conducteur déposé, ainsi que dans ladite matière diélectrique, de façon que la matière diélectrique soit directement en contact avec l'atmosphère et que la continuité électrique de la couche de matériau conducteur soit maintenue.

Le dépôt du matériau conducteur destiné à former l'électrode fissurée peut se faire par tout moyen et notamment par évaporation.

Suivant un mode de mise en œuvre particulier

du procédé de fabrication d'un capteur capacitif objet de l'invention, celui-ci comprend les étapes suivantes :

— sur un substrat isolant, on dépose l'une des faces conductrices qui est constituée par une couche de tantale que l'on oxyde anodiquement,

— on dépose une première électrode de contact sur la face en tantale oxydée et une deuxième électrode de contact sur le substrat,

— on dépose une couche de polymère sur toute la surface du substrat, la couche présentant un certain nombre de trous, et

— on dépose, sur la couche de polymère, une couche métallique constituant l'autre face conductrice du condensateur, cette couche métallique étant en contact avec la deuxième électrode de contact à travers lesdits trous.

Dans ce cas, on peut utiliser un polyimide comme matière diélectrique et du chrome pour réaliser l'électrode fissurée.

L'invention sera mieux comprise à l'aide de la description qui va suivre, donnée à titre purement illustratif et nullement limitatif, en référence aux dessins annexés, dans lesquels :

la figure 1   est une vue schématique en perspective d'un hygromètre selon l'invention,

la figure 2   est une vue en plan illustrant un procédé de fabrication d'un hygromètre selon l'invention, et

la figure 3   est une vue en coupe suivant la ligne A-A de la figure 2.

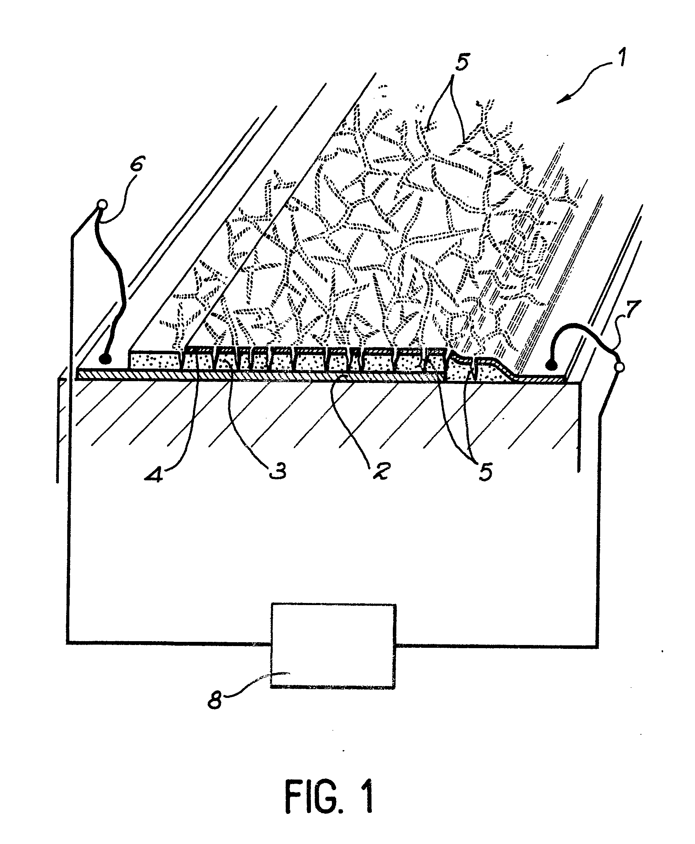

Sur la figure 1, on voit le condensateur 1 qui comporte une première électrode 2 continue et non fissurée. Sur cette électrode se trouvent le diélectrique 3, qui peut être un ester de cellulose par exemple, puis l'autre électrode 4, cette dernière ainsi que le diélectrique 3 étant entaillés par de nombreuses fissures 5. Pour plus de clarté, celles-ci ont été volontairement grossies sur le dessin, mais en réalité, il peut s'agir de fissures microscopiques invisibles à l'œil nu. Enfin, deux fils conducteurs 6 et 7, connectés aux électrodes 2 et 4 respectivement, relient le condensateur à des moyens de mesure 8 qui permettent d'en déterminer la constante diélectrique.

L'électrode fissurée 4 est constituée par un métal peu sensible à la corrosion comme le chrome. Dans le système décrit ici, l'humidité de l'air n'a pas à traverser une couche métallique mince et l'électrode fissurée 4 peut être imperméable et même très épaisse. De tels hygromètres ont été réalisés avec des épaisseurs de chrome allant de 200 à 5 000 Å : aucune différence significative dans les temps de réponse n'a pu être décelée. Pour la même raison, on peut encore améliorer la résistance à la corrosion en ajoutant à la couche de chrome une couche d'un métal noble, du platine ou de l'or par exemple, et augmenter encore la longévité de l'hygromètre.

Le condensateur est réalisé par dépôt par évaporation sur la couche de diélectrique d'un métal connu pour être contraint en tension lorsqu'il est déposé en couche mince et qui se contracte en générant un grand nombre de craquelures. Plus précisément, on place dans une enceinte où l'on a fait le vide une couche de polymère, par exemple un ester de cellulose, qui servira de diélectrique. Dans la même enceinte, on fait évaporer un métal qui se dépose sur le diélectrique, les conditions expérimentales pouvant être ajustées en fonction de l'épaisseur qu'on veut obtenir.

La première électrode est constituée d'une couche de tantale oxydé anodiquement. La couche très mince d'oxyde de tantale évite tout court-circuit entre les deux électrodes, même en présence de trous dans le polymère. Elle constitue une capacité très élevée en série avec celle du polymère, et ne diminue donc en rien la sensibilité du capteur.

Une partie de la première électrode est protégée de l'oxydation pour permettre les prises de contact. Le polymère peut être déposé par trempe dans une solution et séchage.

Le polymère utilisé couramment est l'acétate butyrate de cellulose, mais on a obtenu une bonne sensibilité avec d'autres polymères tels que les polyimides ou les plexiglas.

La couche métallique qui, pour des raisons diverses et mal connues, est contrainte en tension, exerce des forces importantes sur le polymère ; celui-ci n'étant pas assez rigide, la couche métallique se fissure, entraînant la fissuration de la couche de polymère. On obtient ainsi un réseau de fissures microscopiques très nombreuses dont la largeur est de l'ordre d'une fraction de micromètre.

Ce réseau de fissures délimite des « îlots » de métal à la surface du condensateur, les dimensions de ceux-ci étant de l'ordre de quelques micromètres, mais on observe expérimentalement qu'il y a toujours quelques points de contact entre les différents îlots et que la continuité électrique de l'électrode fissurée 4 est maintenue.

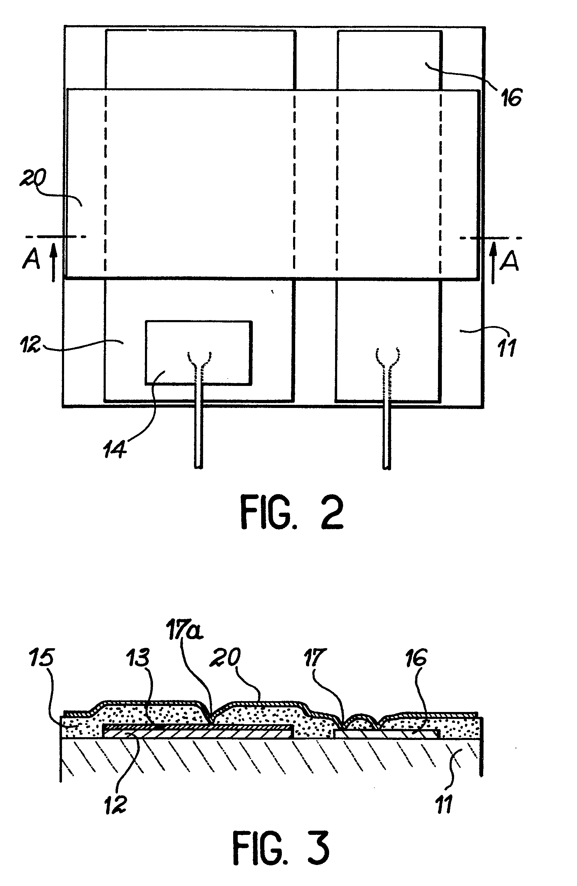

Les figures 2 et 3 illustrent un mode particulier de fabrication d'un hygromètre selon l'invention.

Sur un substrat isolant 11 (en verre par exemple), on dépose une couche de tantale 12 qui sera la première électrode et que l'on oxyde anodiquement de manière à obtenir une couche superficielle d'oxyde 13. On dépose ensuite les électrodes de prise en contact, à savoir une première électrode de prise de contact 14 sur la première électrode 12 et une deuxième électrode de prise de contact 16 sur le substrat 11 à côté de la première électrode en tantale 12. Les électrodes de prise de contact peuvent être en chrome, en nickel ou en or par exemple. Pour assurer le contact électrique entre les électrodes 14 et 12 on peut soit protéger l'électrode 12 contre l'oxydation à l'aide d'une résine, soit percer la couche d'oxyde avant de réaliser la soudure.

On dépose ensuite une couche de polymère 15 sur toute la surface du substrat 11 de manière à ce qu'elle présente un certain nombre de trous 17. Pour cela il est commode de faire tourner rapidement l'ensemble à l'aide d'un appareil tel que ceux utilisés pour étaler les résines photosensibles sur les circuits intégrés. On laisse sécher le polymère puis on dépose sur celui-ci une couche de chrome 20 épaisse et poreuse. Si nécessaire, on peut ajuster la capacité du condensateur en grattant le polymère et la couche de chrome qui lui est liée. Quant aux trous 17 de la couche de polymère, ils permettent au chrome d'assurer le contact électrique avec l'électrode de prise de contact 16. Il se peut que certains trous comme le trou 17a soient situés au-dessus de l'électrode 12, mais l'existence de la couche isolante 13 obtenue par oxydation anodique de l'électrode 12 évite tout risque de court-circuit entre cette dernière et l'électrode fissurée 20.

Par ce procédé, on a pu réaliser des capteurs de 6 × 6 mm fabriqués par séries de 49, avec un rendement atteignant presque 100 %.

Un rapide calcul permet d'estimer le gain sur le temps de réponse de l'hygromètre objet de l'invention par rapport à un hygromètre classique.

Dans un hygromètre classique, la surface de diélectrique en contact avec l'humidité de l'air (à travers une mince couche d'or) est égale à la surface des armatures du condensateur alors que, dans l'hygromètre objet de l'invention, elle est égale à la surface mise à jour grâce aux fissures. Si on appelle d la distance moyenne entre fissures, e l'épaisseur du polymère et si on assimile chaque îlot à un carré, en admettant que chaque fissure entaille complètement le diélectrique, le rapport entre les surfaces en contact avec l'atmosphère d'un capteur classique et de l'hygromètre selon l'invention est :

$$d^2/(4 \ ed).$$

Dans les capteurs qui ont été réalisés, on arrive couramment à des valeurs $e \simeq d \simeq 2\mu m$ : la surface en contact avec l'atmosphère est donc multipliée par 4 pour un même volume de matière diélectrique et pour une même surface des armatures du condensateur. En fait, les essais effectués indiquent un gain encore plus important sur le temps de réponse : ceci montre qu'un diélectrique fissuré, conforme à la présente invention, laisse pénétrer l'eau beaucoup plus facilement qu'un diélectrique simplement recouvert d'une couche métallique même très mince comme dans les hygromètres de l'art antérieur.

On voit donc que l'hygromètre selon l'invention présente de nombreux avantages : il est sensible aux variations du degré hygrométrique de l'air avec un faible temps de réponse. De plus, il est peu sensible à la corrosion puisque l'électrode fissurée n'a plus besoin d'être très mince pour laisser passer l'humidité de l'air : au contraire, elle peut être épaisse, ce qui augmente sa durée de vie et donc celle de l'hygromètre. D'autre part, la largeur des fissures est très faible (de l'ordre de 1 000 à 2 000 Å) et les poussières atmosphériques, de dimensions généralement plus importantes, n'y pénètrent pas : ceci constitue un autre élément favorable à la longévité de l'appareil.

Enfin, il est bien évident que le capteur capacitif selon l'invention peut avoir d'autres applications que les mesures hygrométriques : il suffit d'utiliser comme couche diélectrique un matériau dont la constante diélectrique varie en fonction de la grandeur à mesurer.

**Revendications**

1. Capteur capacitif, du genre de ceux qui sont constitués par un condensateur ayant deux faces conductrices (2, 4 ; 12, 20) entre lesquelles se trouve une matière diélectrique (3 ; 15) dont la constante diélectrique varie en fonction de la quantité absorbée par ladite matière d'un composant de l'atmosphère dans laquelle se trouve le capteur, les faces conductrices dudit condensateur étant reliées à des moyens de mesure (8) de la constante diélectrique représentative de la quantité absorbée dudit composant, caractérisé en ce que l'une des faces conductrices (4 ; 20) du condensateur ainsi que la matière diélectrique (3 ; 15) comportent de nombreuses fissures (5) mettant la matière diélectrique (3) directement en contact avec l'atmosphère, la continuité électrique de la face conductrice fissurée (4 ; 20) étant cependant maintenue.

2. Capteur capacitif selon la revendication 1, caractérisé en ce que la matière diélectrique est d'un type dont la constante diélectrique varie en fonction de la quantité d'eau absorbée.

3. Capteur capacitif selon la revendication 2, caractérisé en ce que la matière diélectrique (3) est un ester de cellulose.

4. Capteur capacitif selon l'une quelconque des revendications 2 et 3, caractérisé en ce que la face conductrice fissurée (4) est constituée par un matériau conducteur peu sensible à la corrosion.

5. Capteur capacitif selon la revendication 4, caractérisé en ce que le matériau constituant la face conductrice fissurée (4) est du chrome.

6. Capteur capacitif selon l'une quelconque des revendications 4 et 5, caractérisé en ce que le matériau constituant la face conductrice fissurée (4) est recouvert d'une couche d'un métal noble, notamment du platine ou de l'or.

7. Capteur capacitif selon l'une quelconque des revendications 1 à 6, caractérisé en ce que l'autre face conductrice (2) du condensateur est constituée d'une couche de tantale oxydée anodiquement.

8. Procédé de fabrication du capteur capacitif selon la revendication 1, du genre de ceux dans lesquels on réalise un condensateur en disposant entre deux faces conductrices (2, 4 ; 12, 20) une matière diélectrique dont la constante diélectrique varie en fonction de la quantité absorbée par ladite matière d'un composant de l'atmosphère dans laquelle se trouve le capteur, caractérisé en ce qu'on forme l'une desdites faces conductrices (4 ; 20) en déposant sur ladite matière diélectrique (3 ; 15) un matériau conducteur présentant des contraintes conduisant à des fissures dans le matériau conducteur déposé, ainsi que dans ladite matière diélectrique, de façon que la matière diélectrique soit directement en contact avec l'atmosphère et que la continuité électrique de la couche de matériau conducteur (4 ; 20) soit maintenue.

9. Procédé selon la revendication 8, caractérisé en ce que le dépôt du matériau conducteur est réalisé par évaporation.

10. Procédé selon l'une quelconque des revendications 8 et 9, caractérisé en ce qu'il comprend les étapes suivantes :

— sur un substrat isolant (11), on dépose l'une des faces conductrices (12) qui est constituée par une couche de tantale que l'on oxyde anodiquement,

— on dépose une première électrode de contact (14) sur la face en tantale oxydée et une deuxième électrode de contact (16) sur le substrat (11),

— on dépose une couche de polymère (15) sur toute la surface du substrat (11), la couche (15) présentant un certain nombre de trous (17), et

— on dépose, sur la couche de polymère (15), une couche métallique (20) constituant l'autre face conductrice du condensateur, cette couche métallique (20) étant en contact avec la deuxième électrode de contact (16) à travers lesdits trous (17).

11. Procédé selon l'une quelconque des revendications 8 à 10, caractérisé en ce que ladite matière diélectrique est un polyimide est en ce que le matériau conducteur constituant la couche fissurée (4 ; 20) est du chrome.

## Claims

1. Capacitive sensor, of the type which is constituted by a condenser having two conductive faces (2, 4 ; 12, 20) between which is a dielectric material (3 ; 15) whose dielectric constant varies as a function of the quantity absorbed by said material of a component of the atmosphere in which the sensor is located, said conductive faces of said condenser being connected to measuring means (8) of the dielectric constant indicating the absorbed quantity of said component, characterized in that one of the conductive faces (4 ; 20) of the condenser, as well as the dielectric material (3 ; 15) comprises numerous fissures (5) placing the dielectric material (3) directly in contact with the atmosphere, while maintaining the electric continuity of the fissured conductive face (4 ; 20).

2. Capacitive sensor according to Claim 1, characterized in that the dielectric material is of a type whose dielectric constant varies as a function of the quantity of water absorbed.

3. Capacitive sensor according to Claim 2, characterized in that the dielectric material (3) is a cellulose ester.

4. Capacitive sensor according to either of Claims 2 and 3, characterized in that the fissured conductive face (4) comprises a conductive material of low susceptibility to corrosion.

5. Capacitive sensor according to Claim 4, characterized in that the material constituting the fissured conductive face (4) is chromium.

6. Capacitive sensor according to either of Claims 4 and 5, characterized in that the material constituting the fissured conductive face (4) is covered with a layer of a noble metal, especially platinum or gold.

7. Capacitive sensor according to any of Claims 1 to 6, characterized in that the other conductive face (2) of the condensor, comprises a layer of anodically oxidized tantalum.

8. Process for the manufactor of a capacitive sensor according to Claim 1, of the type in which a condensor is formed by disposing, between two conductive surfaces (2, 4 ; 12, 20), a dielectric material whose dielectric constant varies as a function of the quantity absorbed by said material of a component of the atmosphere in which the sensor is located, characterized in that the conductive faces (4 ; 20) are formed by depositing on said dielectric material (3 ; 15) a conductive material with means leading to fissures in the deposited conductive material, as well as in said dielectric material, whereby the dielectric material is directly in contact with the atmosphere and that electrical continuity of the layer of conductive material (4 ; 20) is maintained.

9. Process according to Claim 8, characterized in that deposition of the conductive material is brought about by evaporation.

10. Process according to either of Claims 8 and 9, characterized in that it comprises the following steps :

— one of the conductive faces (12) constituted by a layer of anodically oxidized tantalum is deposited on an insulating substrate (11),

— a first contact electrode (14) is positioned on the surface of oxidized tantalum, and a secondary contact electrode (16) is positioned on the substrate (11),

— a polymer layer (15) is deposited on the surface of substrate (11), the layer (15) having a number of holes (17), and

— a metal layer (20) constituting the other conductive face of the condenser is deposited on the polymer layer (15), said metal layer (20) being in contact with the second contact electrode (16) through said holes (17).

11. Process according to any one of Claims 8 to 10, characterized in that said dielectric material is a polyimide, and in that the conductive material constituting the fissured layer (4 ; 20) is chromium.

## Patentansprüche

1. Kapazitiver Fühler von der Art jener, die aus einem Kondensator gebildet sind, der zwei Leiterflächen (2, 4 ; 12, 20) aufweist, zwischen denen sich ein Dielektrikum (3 ; 15) befindet, dessen Dielektrizitätskonstante sich in Abhängigkeit von der Menge eines von dem Dielektrikum absorbierten Bestandteils der Atmosphäre verändert, in der sich der Fühler befindet, wobei die Leiterflächen des Kondensators mit einer Meßeinrichtung (8) für die Dielektrizitätskonstante verbunden ist, die für Menge des genannten absorbierenden Bestandteils repräsentativ ist, dadurch gekennzeichnet, daß eine der Leiterflächen (4 ; 20) des Kondensators und das Dielektrikum (3 ; 15) eine Vielzahl von Rissen (5) aufweisen, die das Dielektrikum (3) dem direkten Kontakt mit der Atmosphäre aussetzen, wobei jedoch der elektrische Zusammenhang der mit Rissen versehenen elektrisch leitfähigen Fläche (4 ; 20) aufrechterhalten ist.

2. Kapazitiver Fühler nach Anspruch 1, dadurch gekennzeichnet, daß das Dielektrikum von einer Art ist, deren Dielektrizitätskonstante sich in Abhängigkeit von der absorbierten Wassermenge ändert.

3. Kapazitiver Fühler nach Anspruch 2, dadurch gekennzeichnet, daß das Dielektrikum (3) ein Zelluloseester ist.

4. Kapazitiver Fühler nach einem der Ansprüche 2 und 3, dadurch gekennzeichnet, daß die mit Rissen versehene Leiterfläche (4) aus einem Leitermaterial besteht, das auf Korrosion wenig empfindlich ist.

5. Kapazitiver Fühler nach Anspruch 4, dadurch gekennzeichnet, daß das Material, das die mit Rissen versehene Leiterfläche (4) bildet, Chrom ist.

6. Kapazitiver Fühler nach einem der Ansprüche 4 und 5, dadurch gekennzeichnet, daß das Material, das die mit Rissen versehene Leiterfläche (4) bildet, von einer Edelmetallschicht, insbesondere Platin oder Gold bedeckt ist.

7. Kapazitiver Fühler nach einem der Ansprüche 1 bis 6, dadurch gekennzeichnet, daß die andere Leiterfläche (2) des Kondensators aus einer Schicht aus anodisch oxidiertem Tantal besteht.

8. Verfahren zur Herstellung eines kapazitiven Fühlers nach Anspruch 1 von der Art jener, bei denen man einen Kondensator herstellt, indem man zwischen zwei Leiterflächen (2, 4 ; 12, 20) ein Dielektrikum anordnet, dessen Dielektrizitätskonstante sich in Abhängigkeit von der Menge des von dem Dielektrikum absorbierten Bestandteils der Atmosphäre, in dem sich der Fühler befindet, ändert, dadurch gekennzeichnet, daß man die eine der Leiterflächen (4 ; 20) durch Abscheiden auf dem Dielektrikum (3 ; 15) eines Leitermaterials erzeugt, das Verdünnungen aufweist, die zu Rissen in dem niedergeschlagenen Leitermaterial und in dem genannten Dielektrikum führen, so daß das Dielektrikum in direkten Kontakt mit der Atmosphäre gelangt und der elektrische Zusammenhang der Schicht aus dem Leitermaterial (4 ; 20) aufrechterhalten bleibt.

9. Verfahren nach Anspruch 8, dadurch gekennzeichnet, daß der Niederschlag des Leitermaterials durch Verdampfung erfolgt.

10. Verfahren nach einem der Ansprüche 8 und 9, dadurch gekennzeichnet, daß es die folgenden Stufen aufweist :

— auf einem isolierenden Substrat (11) ordnet man eine der Leiterflächen (12) an, die aus einer Schicht aus Tantal besteht, das man anodisch oxidiert,

— auf der oxidierten Tantalfläche ordnet man eine erste Kontaktelektrode (14) und auf dem Substrat (11) ordnet man eine zweite Kontaktelektrode (16) an,

— auf der gesamten Oberfläche des Substrats (11) ordnet man eine Polymerschicht (15) an, die eine gewisse Anzahl von Löchern (17) aufweist, und

— auf der Polymerschicht (15) ordnet man eine Metallschicht (20) an, die die andere Leiterfläche des Kondensators bildet und die mit der zweiten Kontaktelektrode (16) über die genannten Löcher (17) in Kontakt ist.

11. Verfahren nach einem der Ansprüche 8 bis 10, dadurch gekennzeichnet, daß das Dielektrikum ein Polyimid ist und daß das Leitermaterial, das die mit Rissen versehene Schicht (4 ; 20) bildet, Chrom ist.

FIG. 1

FIG. 2

FIG. 3